# EUROPEAN PATENT APPLICATION

(11) **EP 3 029 364 A1**
(43) Date of publication of application: **08.06.2016**
(21) Application number: 14290361.6
(22) Date of filing: 01.12.2014
(51) Int. Cl.: F16L 3/12, F02M 35/10

(54) **ADJUSTABLE MOUNTING BRACKET FOR AN AIR PIPE FOR AN AIR INTAKE DUCT OF A COMBUSTION ENGINE OF A MOTOR VEHICLE**

(71) Applicant: MANN+HUMMEL GmbH, 71638 Ludwigsburg (DE)
(72) Inventor: Foulboeuf, Gwenaël, 53260 Entrammes (FR)

(57) **Abstract**

The invention relates to an adjustable mounting bracket (10) for an air pipe (44) for an air intake duct of a combustion engine of a motor vehicle, comprising:
- a C-shaped clamping ring (12) formed in one piece and having two free ends (16) that can be spread apart for positioning the clamping ring (12) on the air pipe (44),
- a first and a second flange portion (18, 20) formed on each of the free ends (16) of the clamping ring (12) which are extending from the C-shaped clamping ring (12) in an lateral outer direction, each of the flange portions (18, 20) having a through hole (28) for a threaded screw or bolt (50) for fixing the flange portions (18, 20) to a mounting point (54);
- snap-in means which are provided on each of said flange portions (18, 20) for loosely connecting the flange portions (18, 20) to one another such that the mounting bracket (10) can still be moved relative to the air pipe (44) extending there through and with said through holes (28) being aligned flush with each other.
Upon tightening of the threaded screw or bolt (50) extending through the through holes (28) of the flange portions (18, 20) to the mounting point (54), said flange portions (18, 20) are further approximated until the air pipe (44) is held in a tightly clamped mounting position within the C-shaped clamping ring (12) of the mounting bracket (10). The invention further relates to an air pipe comprising said mounting bracket (10).

## Description

### Technical field

The invention relates to an adjustable mounting bracket suitable for an air pipe to be e.g. used in an air intake duct of a combustion engine, comprising a C-shaped clamping ring formed in one piece and having two free ends that can be spreaded apart for positioning the clam-ping ring on the pipe.

### Technical background

In air intake ducts of combustion engines of a motor vehicle, the air intake duct normally consist of multiple air pipes serially interconnected to each other. Usually, at least one of the air pipes has a mounting flange that is rigidly connected to the air pipe for mounting the air pipe to a stationary mounting point within the engine compartment of the motor vehicle, e.g. between an air outlet of an air filter housing and an air intake of a turbocharger. The air intake duct usually needs to have multiple rubber-elastic pipe sections that allow for adjusting of the position/orientation of the pipe that is to be mounted to the mounting point to compensate for installation tolerances. However, said rubber-elastic pipe sections are rather expensive and usually less resistant to mechanical stress.

There are separate mounting brackets available on the market which allow mounting of a pipe to a fixed mounting position or support. Such a mounting bracket is e.g. disclosed in EP 1 404 998 A1. This mounting bracket, however, does not allow for a sufficient mechanical fixation of an aforementioned air pipe to a mounting point and is rather

### Disclosure of the invention

It is, therefore, the object of the invention to provide a mounting bracket for a pipe for an air intake duct of a combustion engine of a motor vehicle as well as a pipe with such a mounting bracket which allow for a rapid, uncomplicated and mechanically resistant fixation of the pipe to a stationary mounting point and without the need for the aforementioned plurality of rubber-elastic compensation pipe sections.

The object of the invention regarding the mounting bracket is solved by an adjustable mounting bracket according to claim 1. The pipe for an intake air duct of a combustion engine of a motor vehicle shows the features according to claim 8.

The adjustable mounting bracket according to the invention has a first and a second flange portion formed on each of the free ends of the clamping ring which are extending from the C-shaped clamping ring in a lateral outer direction. Each of the flange portions has a through hole for a threaded screw or bolt for fixing the flange portions of the mounting bracket to a mounting point. There are snap-in means provided on each of said flange portions for loosely connecting the flange portions to one another such that the mounting bracket can still be moved relative to the pipe extending therethrough with the through holes being aligned flush with each other. Upon tightening of the threaded screw or bolt extending through the through holes of the flange portions to the mounting point, said flange portions are further approximated until the pipe is held in a tightly clamped mounting position within the C-shaped clamping ring of the mounting bracket. The mounting bracket according to the invention can thus, in a first step, be loosely attached and secured to the pipe by clipping the two flanges together. In this first mounting state of the bracket on the pipe, the bracket can still be moved and repositioned along the longitudinal axis of the pipe as well as rotated around said axis for adjustment of the flange portions and the through holes relative to the mounting point dedicated for the mounting bracket. The pipe can be clamped within the clamping ring of the mounting bracket by simply tightening the threaded bolt or screw to the stationary mounting point, e.g. of an engine part or a body part of the motor vehicle body. Due to the adaptable positioning of the mounting bracket on the air pipe, a plurality of the deformable, e.g. rubber-elastic pipe sections used for compensating installation tolerances, is, in most cases, no longer necessary. This allows for an overall easier and more cost-efficient construction of the air intake duct for a combustion engine of a motor vehicle such as a car or a truck. It is needless to say that the mounting bracket can comprise the threaded bolt or screw.

According to a preferred embodiment of the invention, the C-shaped clamping ring has a bore for insertion of a pin that extends from the circumference of the pipe and which serves to limit a relative movement of the mounting bracket and the pipe. This allows for preassembling the mounting bracket on the pipe without a risk for the mounting bracket being lost during transport or installation thereof. Further, the mounting bracket can thereby be provided on the pipe in a predefined position/orientation relative to the air pipe which is considered suitable for mounting the pipe to the stationary mounting point without major adjustments of the bracket relative to the air pipe during installation thereof. Mounting of the air pipe/mounting clamp to the stationary mounting point can thereby be further facilitated and expedited.

The through holes of the flange portions of the C-shaped clamping ring, according to a further embodiment of the invention, are each preferably formed as an elongated hole. By this, the threaded fixing means can be even more easily positioned as necessary to engage an e.g, threaded bore of the stationary mounting point for the flange portions of the mounting bracket. It needs to be noted that this allows for a further axis along which installation tolerances can be compensated without bending or kinking of the air pipe clamped within the C-shaped clamping ring of the mounting bracket or another air pipe serially connected to said air pipe.

The mounting bracket can preferably be formed as an injection-molded part to keep manufacturing costs low. As to this, the mounting bracket can be formed from a thermoplastic resin. The resin, according to the invention, may comprise aggregates by which the material properties are adjusted as demanded.

According to the invention, the through hole of at least one of the flange portions of the C-shaped clamping ring can be provided with a metal sleeve to thereby further enhance the mechanical resistance of the respective flange portion. Thereby, damage to the respective flange portion e.g. by the threaded bolt or screw, can be prevented. The metal sleeve is preferably at least partially embedded in the material of the flange portion to allow for an easy and one-step production of the mounting bracket by aforementioned injection molding process. Furthermore, the metal sleeve can thereby be fixed undetachably to the flange such that it cannot be lost during transport or mounting of the mounting bracket without destructing the flange. Further, use of such a metal sleeve can compensate an unwanted shrinkage of the thermoplastic resin in the area of the through-hole of the respective flange portion during cooling-off following the injection molding process.

According to a yet further embodiment of the inventive mounting bracket, the snap means of the first flange portion are formed by two tongues that are laterally protruding from the first flange portion. The snap means of the second flange portion are in this case preferably formed by two cantilever-like protrusions with recesses (opening/apertures) for engagement of the tongues of the first flange portion. The two flange portions can thereby be clipped together on both of their lateral sides, which allows for securely interconnecting the flanges with a radial play of the C-shaped clamping ring on the air pipe as well as a play of the clamping ring in its circumferential direction relative to the air pipe.

The mounting bracket according to the invention can be used for mounting of other pipes as well.

### Short description of the drawings

- Fig. 1: shows a mounting bracket for an air pipe having an essentially C-shaped clamping ring which, at its free ends, is provided with flange portion that can be clipped together such that the mounting bracket can be loosely secured to the pipe;
- Fig. 2: shows the mounting bracket from Fig. 1 with the two flanges clipped together;
- Fig. 3: shows the mounting bracket from Fig. 2 in its position on a pipe; and
- Fig. 4: shows a mounting bracket similar to the one shown in Figure 3 with the pipe being held in a clamped position within the C-shaped clamping ring of the mounting clamp.

### Detailed description of an embodiment of the invention

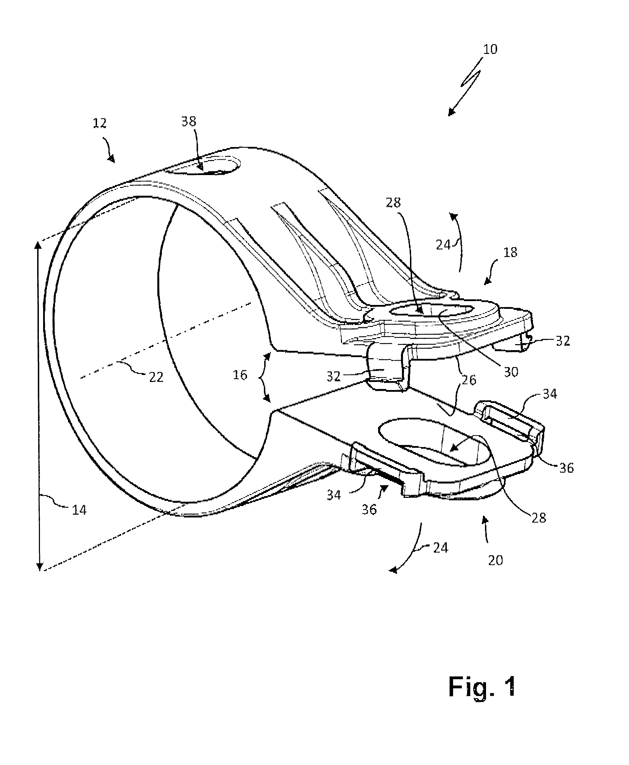

**Fig. 1** shows an adjustable rapid mounting bracket **10** for an air pipe of an air intake (not shwon) of a combustion engine of a motor vehicle, e.g. of a car or a truck. The mounting bracket 10 comprises a C-shaped clamping ring **12** having a baseline cross-section **14** in its baseline that is in its unloaded or unstressed state. The clamping ring 12 is to be mounted on the pipe for fixing the pipe to a stationary mounting point of the motor vehicle and serves to tightly clamp the pipe (not shown) extending therethrough.

The C-shaped clamping ring 12 is formed in one piece as an injection-molded part and can be made from an elastic thermoplastic resin. As can be seen from figure 1, the clamping ring 12 has two free ends **16** with a first and a second flange portion **18, 20** formed thereon. The flange portions 18, 20 are each extending from the C-shaped clamping ring in a lateral outer direction. The flange portions 18, 20 are thus essentially oriented radially to a central axis **22** of the clamping ring 12. The said free ends 16 of the clamping ring 12 can be elastically spread apart in the direction of the arrows **24** for further increasing the baseline cross-section 14 to a widened cross-section and positioning the clamping ring 12 on the pipe. This can be achieved by either threading the pipe into the clamping ring 12 of the mounting bracket or, alternatively, by putting (forcing) the clamping ring over the circumference of the pipe after widening the clamping ring, e.g. by hand.

Each of the flange portions 18, 20 has a contact surface **26** for contacting the respective other flange portion 18, 20 in the mounted state of the mounting bracket. The flange portions 18, 20 are each provided with a through hole **28** which serve for passing a threaded fixing means such as screw or a bolt there through for mounting the mounting bracket 10 to the dedicated mounting point of the motor vehicle. The through holes 28 can each be formed as e.g. a long hole or a cylindrical hole. The through holes 28 of the flange portions 18, 20 can each be provided with a metal sleeve **30** for mechanical reinforcement thereof. The metal sleeves 30 are, in this case, each preferably embedded in the material of the respective flange portion 18, 20 and can be made from steel, aluminum, brass or any other suitable metal.

There are snap-in or catch means which are provided on each of said flange portions 18, 20 for loosely connecting the flange portions 18, 20 to one another such that the mounting bracket 10 can still be moved relative to the pipe extending therethrough with the through holes 28 of the flange portions being aligned flush with each other for insertion of the threaded screw or bolt.

The snap-in or catch means of the first flange portion are formed by two tongues **32** that are laterally protruding from the first flange portion 18. Each of the tongues is designed as a single-armed lever. The snap-in means of the second flange portion 20 are formed by two cantilever-type protrusions **34** with each of the protrusions 34 having a recess (opening/aperture) **36** for engagement of one of the tongues 32 of the first flange portion 18.

As can be seen in Figure 1, the C-shaped clamping ring 12 has a circumferential bore 38 that extends through the clamping ring 12 for engagement with a pin provided on the outer circumference of the air pipe and which is to be clamped within the clamping ring 12. The bore serves to limit a relative movement of the mounting bracket 10 and the pipe and to provide the mounting bracket in a desired position on the pipe suitable for rapidly mounting the mounting bracket 10 to its mounting point.

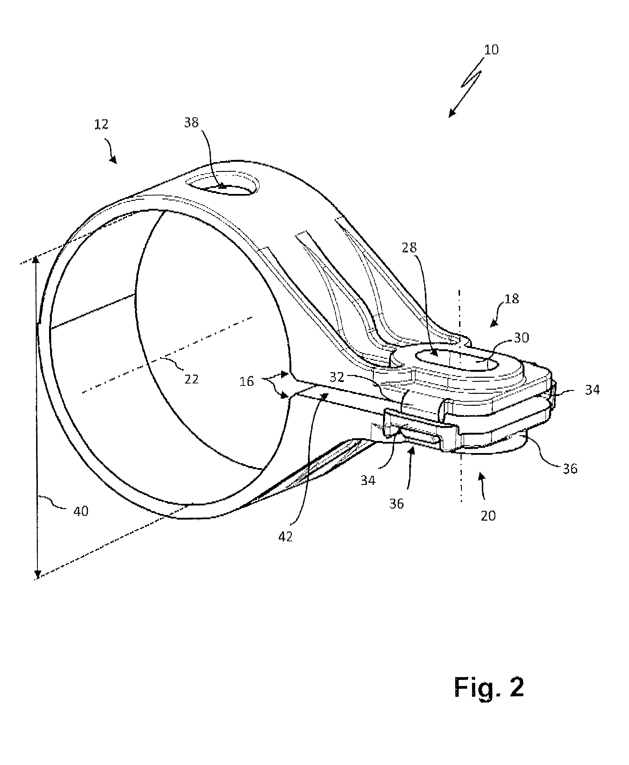

In **Figure 2****,** the mounting bracket 10 is shown in its first operational state, again without the air pipe shown for illustrative purposes.

In the first operational state of the mounting bracket 10, the snap-in means of the two flange portions 18, 20 are snapped together. The two tongues 32 of the first flange portion 18 are engaged within the recesses 36 of the cantilever-type protrusions 34 of the second flange portion 18. The flange portions are thereby held together limiting the free cross-section of the C-shaped clamping ring 12 to a first predetermined operational cross-section **40** and prevents the resilient clamping ring 12 from being widened again. It needs to be noted, that in the first operational state of the mounting bracket shown, the contact surfaces 26 of the flange portions 18, 20, due to the reset force of the elastic clamping ring 12, do not contact each other yet such that there is a gap **42** formed there between. The mounting bracket 10 is, therefore, only loosely mounted on the pipe and can still be repositioned relative to the air pipe along multiple axes as needed for a consecutive fixing the mounting bracket 10 to its mounting point.

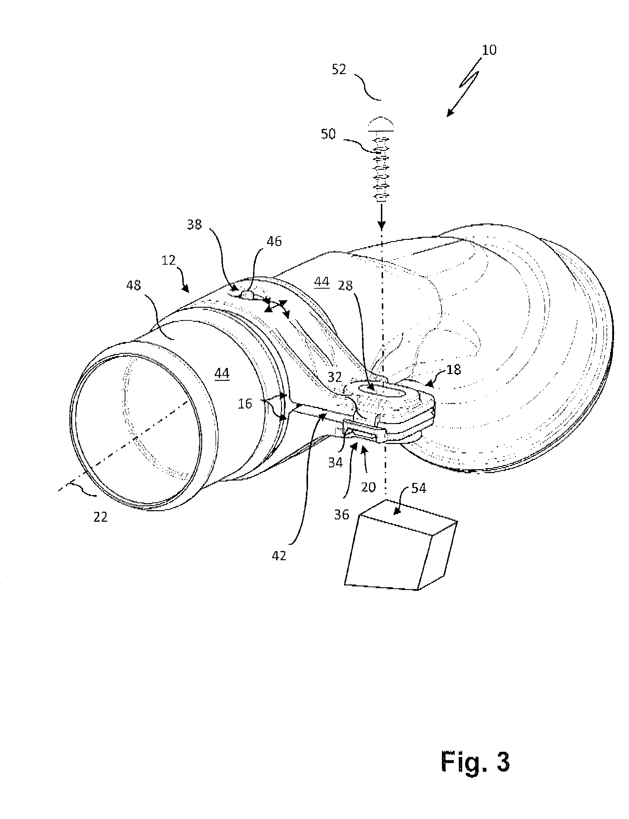

In **Figure 3****,** the mounting bracket 10 is shown in its first operational state shown in Figure 2 on an air pipe **44** with the flange portions being interlocked. The air pipe 44 can be made from e.g. a resin or rubber material or basically any other material suitable for an air intake of a combustion engine. The air pipe **44** extends through the C-shaped clamping ring 12 of the mounting bracket 10. The pipe 44 has a pin **46** extending from its surface **48** in a lateral outer direction which protrudes into the bore 38 of the mounting bracket 10. The mounting bracket 10 can be still be rotated on the pipe 44 and moved in an axial direction thereof for adapting the position of the mounting bracket on the pipe as needed for the threaded bolt or screw **50** having a head section **52** to engage with an e.g. threaded bore of the stationary mounting point **54** of the combustion engine, the car body or the like. The movement of the mounting bracket 10 relative to the pipe 44 is limited by the ratio of the diameter of the pin 46 and the diameter of the bore 38 provided in the C-shaped clamping ring 12. It needs to be noted that said pin 46/bore 38 interaction also serves to provide the air pipe together with the mounting bracket preinstalled in a given mounting position thereon. This can further facilitate and expedite mounting of the bracket 10 to the schematically shown mounting point 54 for the mounting bracket 10.

Upon tightening of the threaded fixing screw or bolt 50 extending through the through holes 28 of the flange portions 18, 20 to said mounting point 54, said flange portions 18, 20 of the C-shaped clamping ring 12 are (inevitably) further approximated until the air pipe 44 is held in a tightly clamped position within the C-shaped clamping ring 12 of the mounting bracket 10. In other words, the first operational cross-section of the C-shaped clamping ring as shown in Fig. 3 is further reduced by tightening the fixing-screw or bolt to the mounting point 54 to an active clamping cross section as explained below.

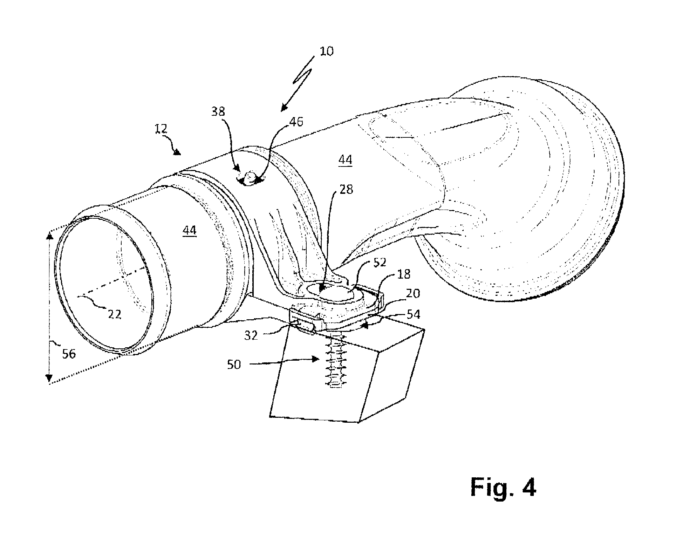

In **Fig. 4****,** there is shown a further embodiment of the mounting bracket 10 which is distinguished from the mounting bracket 10 according to Figures 1 to 3 only in that the bore 38 of the clamping ring 12 is circular. The mounting bracket 10 is shown in its active clamping mode and with the contact surfaces 26 of the flange portions 18, 20 (Figure 1) of the mounting bracket 10 abutting against one another. The threaded fixing bolt or screw 50 is tightly screwed into the mounting point 54 such that the head portion 52 of the threaded fixing bolt or screw 50 presses said (upper) first flange portion 18 against the (lower) second flange portion 20 thereby retaining the C-shaped clamping ring 12 in its clamping mode with its active clamping cross section **56** and in which the air pipe 44 is held tightly clamped within the clamping ring 12 of the mounting bracket 10.

## Claims

1. An adjustable mounting bracket (10) for an air pipe (44) for an air intake duct of a combustion engine of a motor vehicle, comprising:
- a C-shaped clamping ring (12) formed in one piece and having two free ends (16) that can be spread apart for positioning the clamping ring (12) on the air pipe (44),
- a first and a second flange portion (18, 20) formed on each of the free ends (16) of the clamping ring (12) which are extending from the C-shaped clamping ring (12) in an lateral outer direction, each of the flange portions (18, 20) having a through hole (28) for a threaded screw or bolt (50) for fixing the flange portions (18, 20) to a mounting point (56);
- snap-in means which are provided on each of said flange portions (18, 20) for loosely connecting the flange portions (18, 20) to one another such that the mounting bracket (10) can still be moved relative to the pipe (44) extending there through and with said through holes (28) being aligned flush with each other; and
wherein, upon tightening of the threaded screw or bolt (50) extending through the through holes (28) of the flange portions (18, 20) to the mounting point (56), said flange portions (18, 20) are further approximated until the pipe (44) is held in a tightly clamped mounting position within the C-shaped clamping ring (12) of the mounting bracket (10).

2. The mounting bracket according to claim 1, wherein the C-shaped clamping ring (12) has a bore (38) for insertion of a pin that extends from the circumference of the pipe (44) and which serves to limit a relative movement of the mounting bracket (10) and the pipe (44),

3. The mounting bracket according to claim 1 or 2, wherein the through holes (28) of the flange portions (18, 20) of the C-shaped clamping ring (12) are each formed as an elongated hole.

4. The mounting bracket according to any one of the preceding claims, wherein the mounting bracket (10) is formed as an injection-molded part.

5. The mounting bracket according to any one of the preceding claims, wherein the through hole (28) of at least one of the flange portions (18, 20) of the C-shaped clamping ring (12) is provided with a metal sleeve (30).

6. The mounting bracket according to any one of the preceding claims, wherein the metal sleeve (30) is embedded in the material of the flange portion (18, 20).

7. The mounting bracket according to any one of the preceding claims, wherein the snap-in means of the first flange portion (18) are formed by two tongues (32) that are laterally protruding from the first flange portion (18) and wherein the snap means of the second flange portion (20) are formed by two cantilever-type protrusions (34) with recesses (36), in particular openings, for engagement of the tongues (32) of the first flange portion (18).

8. Air pipe (44) for an air intake duct of a combustion engine of a motor vehicle, comprising an adjustable mounting bracket (10) according to any one of the preceding claims for mounting the air pipe (44) to a mounting point (56).

9. Air pipe according to claim 8, wherein the air pipe has a pin (46) that protrudes from the circumference (48) of the air pipe (46) and which is engaged in a bore 38) of the C-shaped clamping ring (12) of the mounting bracket (10).
